**Europäisches Patentamt**

**European Patent Office**

**Office européen des brevets**

(19)

(11) Numéro de publication : **0 370 855 B1**

## (12) FASCICULE DE BREVET EUROPEEN

(45) Date de publication du fascicule du brevet :
**04.11.92 Bulletin 92/45**

(51) Int. Cl.$^5$ : **F42B 10/56**

(21) Numéro de dépôt : **89403074.1**

(22) Date de dépôt : **08.11.89**

---

(54) **Dispositif de verrouillage et de déverrouillage de deux éléments d'un projectile, notamment d'un pot de parachute.**

---

(30) Priorité : **15.11.88 FR 8814802**

(43) Date de publication de la demande :
**30.05.90 Bulletin 90/22**

(45) Mention de la délivrance du brevet :
**04.11.92 Bulletin 92/45**

(84) Etats contractants désignés :
**CH DE ES GB IT LI SE**

(56) Documents cités :
**WO-A-80/01375**
**FR-A- 2 389 023**
**GB-A- 241 115**
**US-A- 2 263 180**
**US-A- 3 669 304**
**US-A- 3 730 099**
**US-A- 3 834 312**
**US-A- 4 697 765**

(73) Titulaire : **THOMSON-BRANDT ARMEMENTS**
**Tour Chenonceaux 204, rond-point du Pont de Sèvres**
**F-92516 Boulogne-Billancourt (FR)**

(72) Inventeur : **Frehaut, Jean-Pierre**
**THOMSON-CSF SCPI Cédex 67**
**F-92045 Paris la Défense (FR)**
Inventeur : **Pineau, Jean-Pierre**
**THOMSON-CSF SCPI Cédex 67**
**F-92045 Paris la Défense (FR)**

(74) Mandataire : **Benoit, Monique et al**
**THOMSON-CSF SCPI**
**F-92045 PARIS LA DEFENSE CEDEX 67 (FR)**

EP 0 370 855 B1

---

## Description

La présente invention concerne un dispositif de verrouillage et de déverrouillage de deux éléments d'un projectile et, plus particulièrement, un dispositif de verrouillage et de déverrouillage d'un pot de parachute.

Dans le cas d'un vecteur ayant pour mission le transport et la dispersion d'une ou plusieurs sous-munitions freinées, il est souvent nécessaire, après éjection de ces sous-munitions, de retarder le freinage final indispensable à leur phase active, par exemple dans le but d'assurer un ralentissement préalable, une dispersion des sous-munitions entre elles, une fonction de sécurité, etc.

Le freinage final est en général réalisé à l'aide d'un parachute dont il convient donc de retarder le décoiffage. De plus, il est intéressant que ce retard puisse être réglé indépendamment pour chaque munition.

Les solutions à base de retards pyrotechniques, utilisées par exemple dans les obus éclairants, ne sont pas utilisables pour deux raisons :

- les retards pyrotechniques à temps long sont difficiles à régler compte tenu de leur dispersion,
- dans le cas de sous-munitions multiples, empilées les unes sur les autres, il est délicat d'initialiser chaque retard indépendamment.

La solution employée habituellement consiste à utiliser une chronométrie qui, dans l'état de la technique actuelle, est électronique de préférence, et on ne conserve qu'un petit générateur de gaz pour fournir l'énergie nécessaire au déverrouillage de la coiffe de parachute. Un dispositif de ce type est connu du US-A-3730099.

L'objet de l'invention consiste à prévoir un tel dispositif de verrouillage et de déverrouillage qui, pour une utilisation dans les conditions exposées ci-dessus, soit particulièrement fiable et de réalisation économique, et qui présente comme autres caractéristiques :

- une facilité de montage lors de l'intégration des sous-munitions,
- un volume réduit,
- une facilité de contrôle de l'état verrouillé ou non autorisant son utilisation pour une fonction de sécurité,
- un fonctionnement parfaitement symétrique par rapport à l'axe des sous-munitions supposé orienté selon le vecteur vitesse, compatible avec une extraction progressive du parachute destinée à réduire les perturbations d'ouverture.

On satisfait à ces exigences en prévoyant dans le premier élément sur lequel se monte le second élément à verrouiller :

- un logement périphérique, ouvert vers l'extérieur,
- un circlip engagé dans ledit logement, dont les extrémités sont écartées en position de repos, et comportant sur son pourtour externe des dents susceptibles de s'engager dans des moyens de retenue prévus dans la paroi dudit second élément, et
- un moyen pour rapprocher les extrémités du circlip, afin de rétracter celui-ci et de faire sortir les dents desdits moyens de retenue, le moyen pour rapprocher les extrémités du circlip étant commandé par un moyen à retard.

Selon une autre caractéristique de l'invention, ledit moyen à retard est un moyen électronique.

Selon une autre caractéristique de l'invention, ledit logement périphérique est une gorge.

Selon une autre caractéristique de l'invention, lesdits moyens de retenue dans la paroi du pot de parachute sont des lumières en correspondance avec lesdites dents.

Selon une autre caractéristique de l'invention, ledit moyen de rapprochement des extrémités du circlip est formé de deux biellettes pouvant pivoter, sensiblement en leur milieu, parallèlement au plan du circlip, une extrémité de chaque biellette étant articulée à une extrémité correspondante dudit circlip, et un moyen d'écartement des deux autres extrémités des biellettes étant prévu, commandé par ledit moyen à retard.

Selon une autre caractéristique de l'invention, ledit moyen d'écartement est un coulisseau, actionné par la tige d'un piston pyrotechnique.

Les caractéristiques de l'invention mentionnées ci-dessus, ainsi que d'autres, apparaîtront plus clairement à la lecture de la description suivante d'un exemple de réalisation, faite en relation avec les dessins joints, parmi lesquels :

la Fig. 1 est une vue partielle schématique, de dessus, montrant le dispositif de l'invention en position non verrouillée,

la Fig. 2 est une vue semblable à la Fig. 1 montrant le dispositif en position verrouillée, et

la Fig. 3 est une vue partielle en coupe verticale selon la ligne III-III de la Fig. 1.

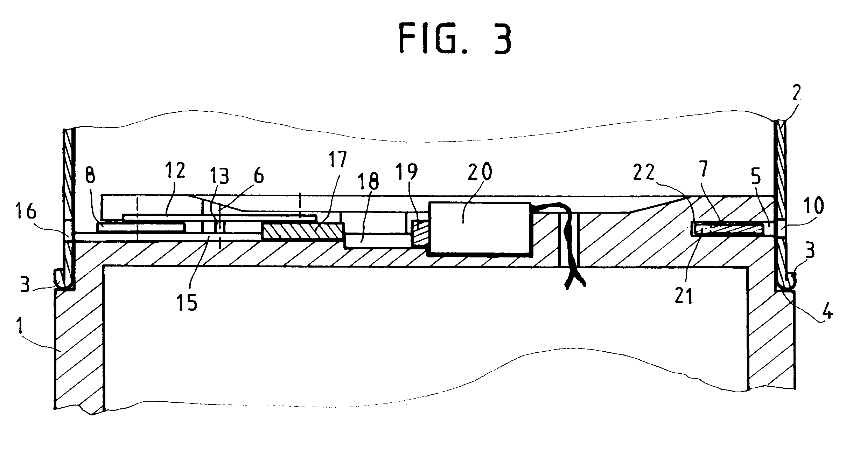

A la Fig. 3, est représentée en coupe la partie supérieure d'une structure 1 généralement solidaire d'une sous-munition, laquelle structure est coiffée par la partie inférieure d'un pot de parachute 2 à bord rabattu 3. Un épaulement 4 sur la face externe de la structure 1 permet un positionnement précis du pot 2.

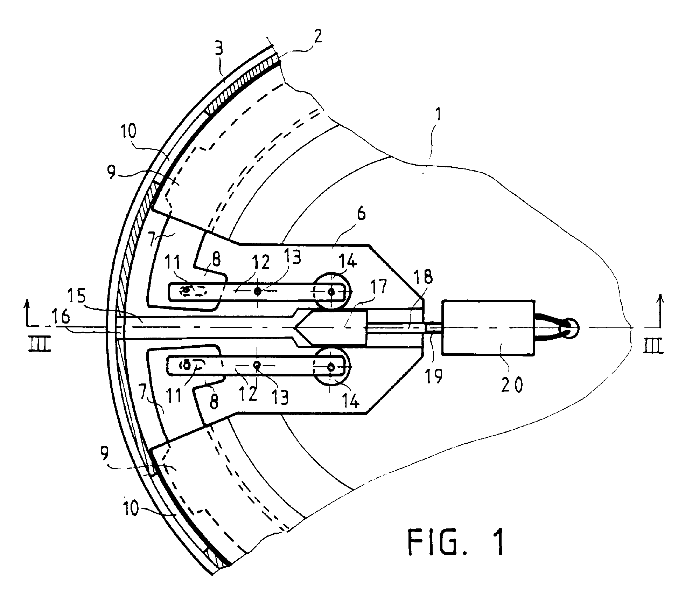

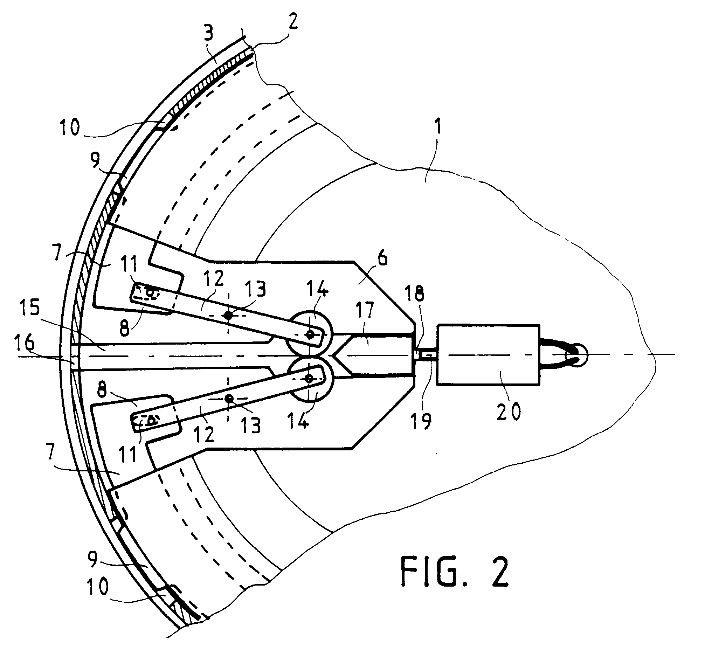

Au-dessus de l'épaulement 4, la structure 1 présente une gorge périphérique 5 ouverte vers l'extérieur. La gorge 5 est interrompue par une partie en creux à symétrie radiale 6 dans la face supérieure de la structure 1. Dans la gorge 5, est logé un circlip 7 dont les extrémités forment deux oreilles écartées 8, dirigées vers l'intérieur, et contenues dans la partie en creux 6. Sur son pourtour externe, le circlip 7 présente des dents 9 régulièrement espacées, dirigées vers l'extérieur. La gorge 5 est suffisamment profonde pour que le circlip 7 avec ses dents 9 soit susceptible d'y rentrer complètement quand il est resserré. Par contre, lorsque le circlip est dans son état initial, ou état déployé, ses dents 9 sont hors de la gorge 5. En présence d'un pot de parachute 2 sur la structure 1, les dents 9 sont alors engagées dans des lumières correspondantes 10 prévues dans la partie inférieure du pot 2, Fig. 2. Pour montrer clairement lesdites lumières 10 aux Figs. 1 et 2, le pot de parachute 2 est représenté coupé à leur niveau.

Chaque oreille 8 du circlip 6 comporte une lumière oblongue 11 de direction sensiblement radiale, par laquelle elle est articulée avec une extrémité d'une biellette 12. Les biellettes 12 sont montés pivotantes, sensiblement dans leur partie médiane, autour d'axes 13 perpendiculaires au plan du circlip 7. Les autres extrémités des biellettes 12 portent des galets 14, sensiblement dans le plan du circlip 7. La présence des galets 14 n'est pas rigoureusement nécessaire au fonctionnement, mais ils permettent, par diminution des frottements, d'obtenir une réduction de l'énergie nécessaire à l'actionnement du dispositif.

Entre les biellettes 12, le fond de la partie en creux 6 présente une rainure radiale 15 dont l'extrémité externe communique avec une lumière 16 dans la partie inférieure du pot de parachute 2. Vers l'intérieur, la rainure 15 s'élargit de chaque côté avant les galets 14 et elle se prolonge, ainsi élargie, au-delà desdits galets.

Dans la partie élargie de la rainure 15, est engagé un coulisseau 17 susceptible de se trouver ou non entre les galets 14, selon sa position dans la rainure. Le coulisseau 17 a son extrémité dirigée vers l'extérieur en forme de pointe, de façon à pouvoir s'engager entre les galets 14 lorsque ces derniers sont rapprochés comme à la Fig. 2.

Le fond de la rainure 16, dans la partie arrière de celle-ci, présente une seconde rainure étroite 18, dans laquelle est engagée la tige 19 d'un piston pyrotechnique 20. La tige 19 dépasse au-dessus de la rainure 18, de façon à pouvoir pousser le coulisseau 17 vers l'extérieur. Le piston pyrotechnique est commandé par un moyen électronique, non représenté.

Les élément du dispositif de l'invention contenus dans la partie en creux 6 sont recouverts par un élément de protection et de retenue, également non représenté. En pratique, ledit élément de protection et de retenue peut être une tôle fixée par vis autotaraudeuses dans la structure 1. On notera que cette tôle peut former la paroi supérieure de la rainure périphérique 5. Dans ces conditions, la structure 1 peut être obtenue directement par moulage ou matriçage sans reprise d'usinage.

Pour placer le pot de parachute 2 sur la structure 1, on met le dispositif dans l'état de la Fig. 1. Pour cela, il suffit de positionner le coulisseau 17 entre les galets 14. Les extrémités du circlip 7 sont ainsi rapprochées, de sorte qu'il est tout entier contenu, avec ses dents 9, dans la gorge 5. Il est alors possible de poser le pot 2 sur la structure 1, en l'amenant en butée sur l'épaulement 4. De préférence, un repère ou un moyen de guidage est prévu pour faciliter le positionnement angulaire des lumières 10. Une fois le pot 2 ainsi placé sur la structure 1, on engage, par la lumière 16, la pointe d'un outil dans la rainure 15, pour repousser le coulisseau 17 vers l'intérieur, au-delà des galets 14. Les extrémités du circlip 7 sont ainsi libérées, de sorte qu'il reprend, par élasticité, sa forme déployée initiale, et que ses dents 9 s'engagent dans les lumières 10 du pot 2, verrouillant celui-ci sur la structure 1.

Le déverrouillage s'opère par la mise sous tension du piston pyrotechnique 20 dont la tige 19 pousse le coulisseau 17 vers l'extérieur, entre les galets 14, ce qui rapproche les extrémités du circlip 7 et rétracte les dents 9 qui sortent des lumières 10. A noter que le rétrécissement de la rainure 15 forme une butée pour le coulisseau 17 qui, lorsqu'il est poussé par la tige 19, est donc contraint de rester entre les galets 14.

A l'opposé du mécanisme de verrouillage, le circlip 7 peut comporter une dent 21, Fig. 3, dirigée vers l'intérieur, destinée à être reçue dans une encoche 22 de la structure 1. L'engagement de la dent 21 dans l'encoche 22 oblige le circlip à fonctionner de façon symétrique, afin d'éviter toute possibilité de coincement.

Le dispositif de l'invention présente plusieurs avantages, notamment celui de pouvoir s'intégrer dans la structure 1, et celui de pouvoir être conçu en tôle emboutie. D'autre part, l'intégration sur la structure 1 s'effectue sur une partie réalisée brute de moulage. Par conséquent, l'ensemble permet une réalisation économique. De plus, la vérification du verrouillage est très facile : il suffit de regarder si les dents du circlip sont engagées dans les lumières du pot de parachute.

Le dispositif de l'invention peut s'appliquer à tout besoin de séparation provoquée de deux éléments d'un projectile.

## Revendications

1) Dispositif de verrouillage et de déverrouillage de deux éléments d'un projectile, caractérisé en ce qu'il comprend, dans le premier élément (1) sur lequel se monte le second élément à verrouiller (2) :
- un logement périphérique, ouvert vers l'extérieur,
- un circlip (7) engagé dans ledit logement, dont les extrémités sont écartées en position de repos, ledit circlip (7) comportant sur son pourtour externe des dents (9) susceptibles de s'engager dans des moyens de retenue prévus dans la paroi dudit second élément (2), et

-un moyen pour rapprocher les extrémités du circlip (7), afin de rétracter celui-ci et de faire sortir les dents (9) desdits moyens de retenue, le moyen pour rapprocher les extrémités du circlip (7) étant commandé par un moyen à retard.

2) Dispositif selon la revendication 1, caractérisé en ce que ledit moyen à retard est un moyen électrique.

3) Dispositif selon la revendication 1 ou 2, caractérisé en ce que ledit logement périphérique dans lequel est engagé le circlip (7) est une gorge (5).

4) Dispositif selon l'une des revendications 1 à 3, caractérisé en ce que lesdits moyens de retenue dans la paroi du second élément (2) sont des lumières (10) en correspondance avec les dents (9).

5) Dispositif selon l'une des revendications 1 à 4, caractérisé en ce que ledit moyen de rapprochement des extrémités du circlip (7) est formé de deux biellettes (12) pouvant pivoter, sensiblement en leur milieu, parallèlement au plan du circlip (7), une extrémité de chaque biellette étant articulée à une extrémité correspondante dudit circlip (7), et un moyen d'écartement des deux autres extrémités des biellettes (12) étant prévu, commandé par ledit moyen à retard.

6) Dispositif selon la revendication 5, caractérisé en ce que ledit moyen d'écartement est un coulisseau (17), actionné par la tige (19) d'un piston pyrotechnique (20).

7) Dispositif selon l'une des revendications 1 à 6, caractérisé en ce que le circlip (7) comporte, à l'opposé du mécanisme de verrouillage, une dent (21) dirigée vers l'intérieur, destinée à être reçue dans une encoche (22) de la structure (1).

8) Dispositif selon l'une des revendications 1 à 7, caractérisé en ce que ledit second élément (2) est un pot de parachute.

**Patentansprüche**

1. Vorrichtung zum Verriegeln und Entriegeln zweier Teile eines Geschosses, dadurch gekennzeichnet, daß es in dem ersten Element (1), auf das sich das zu verriegelnde zweite Element (2) montieren läßt, aufweist:

   -einen nach außen geöffneten Umfangssitz;
   -einen Sicherungsbügel (7), der in den Sitz eingesetzt ist und dessen Enden in der Ruhestellung im Abstand voneinander stehen, wobei der Sicherungsbügel (7) an seinem äußeren Umfang Zähne (9) aufweist, die mit in der Wand des zweiten Elements (2) vorgesehenen Haltemitteln in Eingriff gelangen können; sowie
   -eine Einrichtung, um die Enden des Sicherungsbügels (7) zusammenzubringen, um diesen zurückzuziehen und um die Zähne (9) aus den Haltemitteln treten zu lassen, wobei die Einrichtung zum Zusammenbringen der Enden des Sicherungsbügels (7) durch eine Verzögerungseinrichtung gesteuert ist.

2. Vorrichtung nach Anspruch 1, dadurch gekennzeichnet, daß die Verzögerungseinrichtung eine elektrische Einrichtung ist.

3. Vorrichtung nach Anspruch 1 oder 2, dadurch gekennzeichnet, daß der Umfangssitz, mit dem der Sicherungsbügel (7) in Eingriff steht, eine Kehle (5) ist.

4. Vorrichtung nach einem der Ansprüche 1 bis 3, dadurch gekennzeichnet, daß die Haltemittel in der Wand des zweiten Elements (2) Öffnungen (10) sind, die den Zähnen (9) entsprechen.

5. Vorrichtung nach einem der Ansprüche 1 bis 4, dadurch gekennzeichnet, daß die Einrichtung zum Zusammenbringen der Enden des Sicherungsbügels (7) aus zwei Schwingarmen (12) gebildet ist, die im wesentlichen in ihrer Mitte, parallel zu der Ebene des Sicherungsbügels (7) schwenkbar sind, wobei ein Ende jedes Schwingarms an ein entsprechendes Ende des Sicherungsbügels (7) angelenkt ist, und wobei eine Einrichtung zum Auseinanderbringen der zwei weiteren Enden der Schwingarme (12) vorgesehen ist, die durch die Verzögerungseinrichtung gesteuert ist.

6. Vorrichtung nach Anspruch 5, dadurch gekennzeichnet, daß die Einrichtung zum Auseinanderbringen ein Schlitten (17) ist, der durch den Stift (19) eines pyrotechnischen Kolbens (20) betätigt wird.

7. Vorrichtung nach einem der Ansprüche 1 bis 6, dadurch gekennzeichnet, daß der Sicherungsbügel (7) gegenüber dem Verriegelungsmechanismus einen nach innen gerichteten Zahn (21) aufweist, der in einer Kerbe (22) der Struktur (1) aufgenommen werden soll.

8. Vorrichtung nach einem der Ansprüche 1 bis 7, dadurch gekennzeichnet, daß das zweite Element (2) eine Kammer für Fallschirme ist.

**Claims**

1. A device for the locking and unlocking of two elements of a projectile, characterized in that it comprises, in the first element (1) on which the second element to be locked (2) is mounted:

   -a circumferential socket open towards the exterior,

-a circlip (7) fitting into the said socket and whose two ends are spaced in a neutral position, the said circlip (7) comprising teeth (9) on its external periphery, said teeth (9) being adapted to fit into retaining means provided in the wall of the said second element (2), and -a means in order to move together the ends of the circlip (7) and to retract the same and to cause the teeth to come out (9) of the said retaining means, the means for moving the ends of the circlip (7) being controlled by a delay means.

2. The device as claimed in claim 1, characterized in that the said delay means is an electrical means.

3. The device as claimed in claim 1 or in claim 2, characterized in that the said circumferential socket into which the circlip (7) fits is a groove (5).

4. The device as claimed in any one of the claims 1 through 3, characterized in that the said retaining means in the wall of the second element (2) are openings (10) in alignment with the teeth (9).

5. The device as claimed in any one of claims 1 through 4, characterized in that the said means for moving together the ends of the circlip (7) is constituted by two links (12) able to pivot, substantially in the center thereof, in parallelism to the plane of the circlip (7), one end of each link being articulated at one corresponding end of the said circlip (7), and a means for spacing apart the two other ends of the links (12) being provided which are controlled by the said delay means.

6. The device as claimed in claim 5, characterized in that the said spacing means is a slide (17) operated by the rod (19) of a pyrotechnical piston (20).

7. The device as claimed in any one of claims 1 through 6, characterized in that the circlip (7) comprises, opposite to the locking mechanism, a tooth (21) which is directed towards the interior, adapted to be received in a notch (22) of the structure (1).

8. The device as claimed in any one of claims 1 through 7, characterized in that the said second element (2) is a parachute container.

FIG. 1

FIG. 2

FIG. 3